# DEMANDE DE BREVET EUROPEEN

(11) **EP 0 733 848 A2**
(43) Date de publication de la demande: **25.09.1996**
(21) Numéro de dépôt: 96400618.3
(22) Date de dépôt: 22.03.1996
(51) Int. Cl.: F16N 11/04

(54) **Doseur pour graissage continu**

(30) Priorité: 24.03.1995 ES 9500791 U
(71) Demandeur: Equiza Urtasun, Carlos, 31006 Pamplona (Navarra) (ES)
(72) Inventeur: Equiza Urtasun, Carlos, 31006 Pamplona (Navarra) (ES)
(74) Mandataire: Joly, Jean-Jacques

(57) **Abrégé**

Ce doseur comprend un corps cylindrique creux (8) présentant un orifice de sortie inférieur (11) et un orifice de remplissage latéral (16), un piston (6) de poussée du produit pressé par un ressort (4), lequel prend appui contre une butée (3) qu'on règle dans la direction axiale au moyen d'une vis (1). Le piston porte une aiguille (10) vissée qui passe dans l'orifice de sortie (11) pour ménager un jeu formant la fente de sortie qu'on peut régler en changeant l'aiguille.

## Description

Il existe une grande diversité de dispositifs et de machines qui exigent une alimentation régulière en lubrifiant pour fonctionner correctement, alimentation qui peut être réalisée de manière périodique dans des machines qui le permettent ou l'exigent, auquel cas il existe la possibilité d'assurer cette alimentation par l'intervention d'un ouvrier, ou de façon automatique si les exigences de périodicité sont spéciales. Il existe néanmoins des machines et dispositifs qui exigent une alimentation continue de lubrifiant, en exigeant donc un système qui assure ce type d'alimentation.

Le système normalement utilisé pour cela est constitué dans de nombreux cas par un doseur dans lequel le lubrifiant est logé dans un compartiment fermé, dans lequel est incorporé un piston qui est pressé par un ressort, le compartiment où se trouve le lubrifiant étant muni dans sa zone inférieure d'un orifice de sortie où est en outre disposée une aiguille qui est logée avec un petit jeu par lequel le lubrifiant peut s'échapper lentement, du fait que, grâce au ressort qui pousse le piston, le lubrifiant est soumis à une pression continuelle qui tend à le faire sortir par le jeu précité, de sorte que, plus grand est le jeu, ou la pression exercée par le ressort, plus grande est la quantité du lubrifiant qui s'écoule à travers le jeu pour parvenir aux éléments à lubrifier.

Le dispositif décrit crée une alimentation continue en lubrifiant, en accomplissant la mission pour laquelle il est prévu mais, néanmoins, il présente une série d'inconvénients qui limitent son efficacité et ses possibilités d'utilisation. L'un de ces inconvénients est l'impossibilité de régler la pression que le ressort exerce pour contrôler l'écoulement de lubrifiant, de sorte que tout ce qu'on peut faire est de remplacer le ressort, auquel cas il est nécessaire de démonter tout le dispositif, ce qui fait apparaître un autre inconvénient puisque cette opération exige de vider préalablement le doseur, avec perte d'une partie du lubrifiant et, qu'en outre, lorsqu'on le remplit de nouveau, il est très difficile d'éviter les bulles d'air, de sorte qu'il faut purger le doseur avant de le remettre en service. Le même problème se pose si l'on veut changer l'aiguille doseuse, puisqu'il est de nouveau nécessaire de démonter l'appareil; ce qui pose les problèmes déjà décrits.

Comme on peut donc l'observer, ce dispositif constitue un moyen efficace pour assurer une alimentation continue en lubrifiant mais son entretien et son réglage exigent des démontages continuels qui exigent à leur tour une grande attention et entraîne une perte de temps considérable. Pour éviter tous ces inconvénients, et bénéficier en même temps de tous les avantages offerts par le système indiqué, on propose, selon la présente invention, un doseur qui élimine les inconvénients que présentent les dispositifs classiques.

Ce doseur objet de la présente invention fonctionne de la même façon que les doseurs classiques mais sa conception nouvelle a pour effet qu'il possède des différences notables par rapport à ces derniers, en ce sens qu'il est formé d'une pièce cylindrique creuse fermée qui, dans sa partie inférieure, présente un orifice au travers duquel s'introduit l'aiguille du doseur.

Dans le volume intérieur du corps cylindrique précité, se trouve un indicateur de niveau transparent qui permet d'observer le niveau du lubrifiant à travers des fenêtres ménagées dans le corps cylindrique précité, ce lubrifiant étant introduit dans le doseur à travers un orifice ménagé latéralement dans la partie inférieure, avec un adaptateur pour pistolet graisseur. En outre, le fond du corps du doseur présente une dépression en forme d'anneau dans laquelle peut rester un résidu de lubrifiant, qui évite la formation de bulles d'air lorsqu'on vide et qu'on remplit le doseur.

Au-dessus du lubrifiant est situé le piston pousseur qui, dans ce cas, présente en son centre un orifice fileté dans lequel s'ajuste l'aiguille doseuse, ce qui a pour effet que le changement de l'aiguille exige simplement de vider le doseur, de dévisser l'aiguille à remplacer, de visser la nouvelle aiguille et de remplir le doseur. L'opération décrite est donc très simple et elle s'effectue en très peu de temps, à la différence des complications qui apparaissaient avec les doseurs classiques.

Dans ce cas, le piston est aussi soumis à l'action d'un ressort pousseur mais, maintenant, dans un agencement dans lequel ledit ressort prend appui contre une butée mobile dont la position peut être réglée à l'aide d'une vis qui peut être actionnée de l'extérieur, de sorte que, en pouvant régler la hauteur de cette butée, on peut faire varier la pression que le ressort exerce sans exiger aucun démontage.

Le corps du doseur est fermé, à sa partie supérieure, par un bouchon vissé dans la face intérieure de la pièce qui constitue le corps cylindrique et, à son tour, ce bouchon présente en son centre une perforation où se visse la vis qui règle la hauteur de la butée du ressort de sorte qu'on obtient ainsi l'appui fixe qu'exige cette vis de réglage, laquelle peut en outre être actionnée de l'extérieur. Cette disposition permet de réaliser en outre le remplacement du ressort d'une façon simple, en ce sens que, pour cela, il suffit de dévisser le bouchon, ce qui permet d'accéder commodément, et sans entrer en contact avec le lubrifiant, à l'endroit où le ressort est logé, pour procéder à son remplacement.

Ainsi qu'on peut le déduire de tout ce qui a été expliqué, le doseur objet de l'invention apporte d'importants avantages comparativement aux appareils classiques, puisque la pression exercée par le ressort est réglable tandis que le remplacement de l'aiguille doseuse et du ressort peuvent s'effectuer de façon rapide, simple et propre et que, d'autre part, le système de remplissage-vidange de lubrifiant est exempt de formation de bulles d'air, de sorte qu'il n'est pas nécessaire de purger l'appareil après l'avoir vidé et rempli, en même temps qu'on dispose à tout moment de la possibilité de contrôler le niveau de lubrifiant, à travers l'indicateur de niveau transparent et les fenêtres du corps du doseur.

De cette façon, ce dispositif possède certainement des caractéristiques très avantageuses qui lui confèrent une existence propre et un caractère préférentiel comparativement aux systèmes classiques déjà existants.

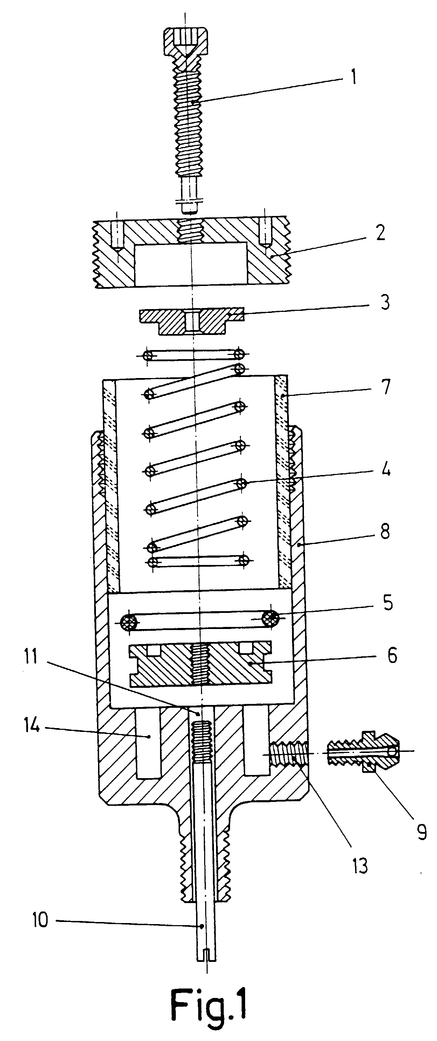

La figure 1 est une vue en coupe de l'ensemble du doseur selon l'invention, sur laquelle les différentes pièces sont représentées à demi-assemblées, de manière qu'on puisse apprécier aussi bien la disposition que les caractéristiques et dimensions de ces pièces.

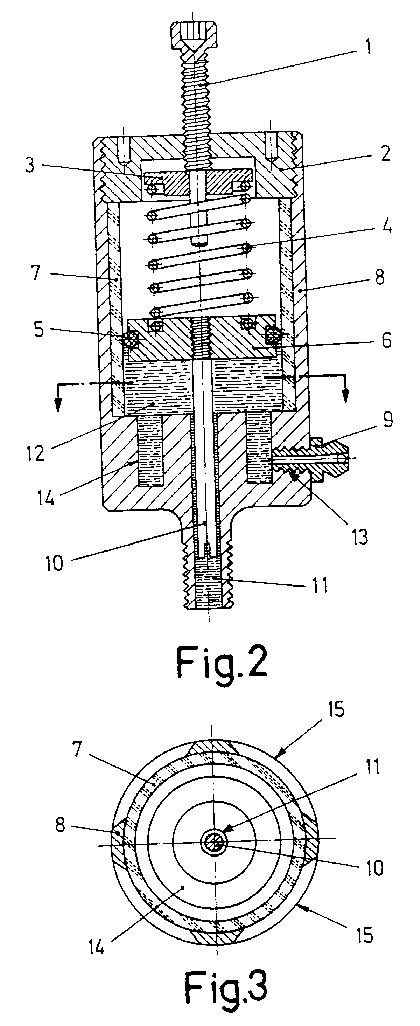

La figure 2 montre une autre vue en coupe de l'ensemble du doseur mais, cette fois, avec le dispositif entièrement assemblé, en laissant voir la position que le lubrifiant occupe et l'action qu'assurent les différentes pièces qui composent l'ensemble.

La figure 3 montre une vue en plan de dessus, en coupe transversale du dispositif, réalisée de la façon indiquée sur la figure précédente, au-dessous du piston et sans lubrifiant.

La figure 4 montre une vue en coupe du doseur, pendant la phase d'introduction du lubrifiant.

La figure 5 montre une vue du doseur analogue à la vue précédente, mais pendant la phase d'actionnement du ressort pour déterminer la sortie du lubrifiant par le jeu que laisse subsister l'aiguille doseuse.

La figure 6 est une vue en coupe du doseur, qui montre l'opération qu'il faut réaliser pour remplacer le ressort.

La figure 7 montre une vue en coupe du doseur, qui représente l'opération nécessaire pour remplacer l'aiguille doseuse.

L'invention a pour objet un doseur destiné à la lubrification continue qui, grâce à ses caractéristiques spéciales, présente des avantages appréciables comparativement aux doseurs classiques.

La pièce qui réunit et donne appui aux autres, dans l'ensemble dudit doseur proposé, est un corps 8 formé d'un cylindre creux qui, dans sa partie inférieure, présente un orifice 11 qui détermine la voie de sortie du lubrifiant 12, de sorte que, pour faciliter le montage de ce doseur en un point approprié, le corps 8 possède un prolongement à travers lequel est défini l'orifice de sortie 11, qui débouche à son extrémité, sur sa surface extérieure, d'un filetage, et au moyen duquel on peut fixer la position du doseur à l'endroit où il doit assurer sa fonction.

Pour introduire le lubrifiant, il est à prévu à son tour un orifice 13 situé dans la zone latérale inférieure du corps 8, lequel orifice 13 est fileté, étant prévu pour le montage d'un adaptateur pour pistolet graisseur 9, lequel bouche cet orifice 13 de manière à ne pas laisser le lubrifiant 12 sortir mais en permettant de l'y faire entrer si on l'applique sous pression ; ledit orifice 13 d'entrée du lubrifiant communiquant avec le fond du creux inférieur du corps 8, endroit où il existe une dépression 14 de forme annulaire, laquelle permet de laisser un restant de lubrifiant 12, même lorsque la pression exercée par le piston 6 est éliminée, lorsqu'on vide le doseur, ce qui permet, dans les opérations telles que celles consistant à changer l'aiguille doseuse 10, qui exigent de vider le doseur, d'éviter l'apparition de bulles d'air qui exigerait de purger le dispositif après l'avoir rempli.

Le corps 8 possède, dans sa paroi latérale, des ouvertures 15 du type des fenêtres, qui permettent d'observer de l'extérieur le niveau de lubrifiant 12 existant, cependant qu'entre le corps 8 précité et le lubrifiant 12 proprement dit, est intercalé un indicateur de niveau transparent 7, constitué par une pièce cylindrique creuse en matière transparente, qui est introduite dans le logement où se loge le lubrifiant 12, de manière à recouvrir la paroi intérieure du corps 8, de sorte que le logement où se loge le lubrifiant 12, est limité, à sa partie inférieure, par le fond où se trouve la sortie 11 et, latéralement, par l'indicateur de niveau transparent 7 précité, de sorte que le lubrifiant 12 est visible à travers les fenêtres 15.

Ledit logement du lubrifiant 12 est limité en haut par un piston 6 formé d'un disque muni d'un orifice fileté en son centre tandis que, sur sa face supérieure, il forme un appui pour un ressort 4 chargé d'exercer la pression appropriée. Ce piston 6 présente dans son côté un joint torique 5 qui s'interpose entre le piston et l'indicateur de niveau transparent 7, en empêchant ainsi le lubrifiant 12 de passer dans le logement où se trouve le ressort 4.

Dans l'orifice fileté dudit piston 6 est vissée une aiguille doseuse 10, laquelle se prolonge vers le bas en traversant le logement où se trouve le lubrifiant 12, pour s'introduire dans l'orifice de sortie 11 ; le diamètre de cette aiguille doseuse 10 étant légèrement inférieur au diamètre de l'orifice de sortie 11, d'où il résulte qu'il se forme un petit jeu à travers lequel le lubrifiant 12 peut s'écouler, poussé par la pression à laquelle il est soumis par le piston 6, en finissant par sortir du doseur lorsqu'il atteint l'extrémité de l'orifice de sortie 11. La longueur de l'aiguille doseuse 10 a pour effet que, lorsque le piston atteint sa position la plus basse, l'extrémité de cette aiguille fasse saillie à travers l'orifice 11 de sortie du lubrifiant, ladite aiguille 10 possédant à cette extrémité une fente qui facilite le vissage et le dévissage de l'aiguille par rapport à l'orifice du piston 6.

Comme on l'a déjà dit, sur le piston 6, est placé le ressort 4 dont la pression est responsable du fait que le lubrifiant 12 s'écoule à travers le jeu existant entre l'aiguille doseuse 10 et l'orifice de sortie 11. Le ressort 4 s'appuie sur un siège circulaire que le piston 6 forme dans sa face supérieure, ce siège évitant que le ressort 4 glisse sur le piston 6, tandis que, sur le piston 4 se trouve, pour servir d'appui, une butée 3 dont la position peut être modifiée de l'extérieur.

Cette butée 3 du ressort 4 est une pièce en forme de disque ayant un orifice en son centre, et qui possède, sur sa face inférieure, un siège qui, de même, que dans le cas du piston 6, assure un appui correct du ressort 4 ; tandis que l'orifice central est destiné au passage de l'extrémité d'une vis de réglage 1 au moyen de laquelle il est possible de régler la position de la butée 3, en conditionnant ainsi la compression du ressort 4 et, par conséquent, la poussée de ce ressort sur le piston 6. Pour éviter dans chaque cas que le ressort 4 ne puisse être excessivement comprimé, et pour pouvoir réaliser néanmoins une purge correcte sans qu'il ne reste de bulles d'air dans la masse du lubrifiant 12, il est prévu que l'extrémité traversante de la vis 1 émerge de l'autre côté de l'élément de butée 3 sur une certaine longueur.

L'élément qui donne appui à la vis de réglage 1 et, par conséquent, également à la butée 3 et au ressort 4, est un bouchon de fermeture 2 qui est vissé dans le bord du creux cylindrique qui forme le corps 8, en le fermant à son extrémité supérieure, tandis qu'en son centre, il présente un orifice fileté par où on introduit la vis de réglage 1, la tête de cette dernière faisant saillie au-dessus du doseur. De cette façon, on -peut faire tourner la vis 1 de l'extérieur, en introduisant plus ou moins à travers l'orifice central du bouchon de fermeture 2, de sorte que, lorsqu'elle est introduite, elle repousse la butée 3 vers le bas, de sorte que le ressort est ainsi plus comprimé, tandis qu'en sens inverse, elle attire la butée 3 vers le haut, en réduisant la pression du ressort 4.

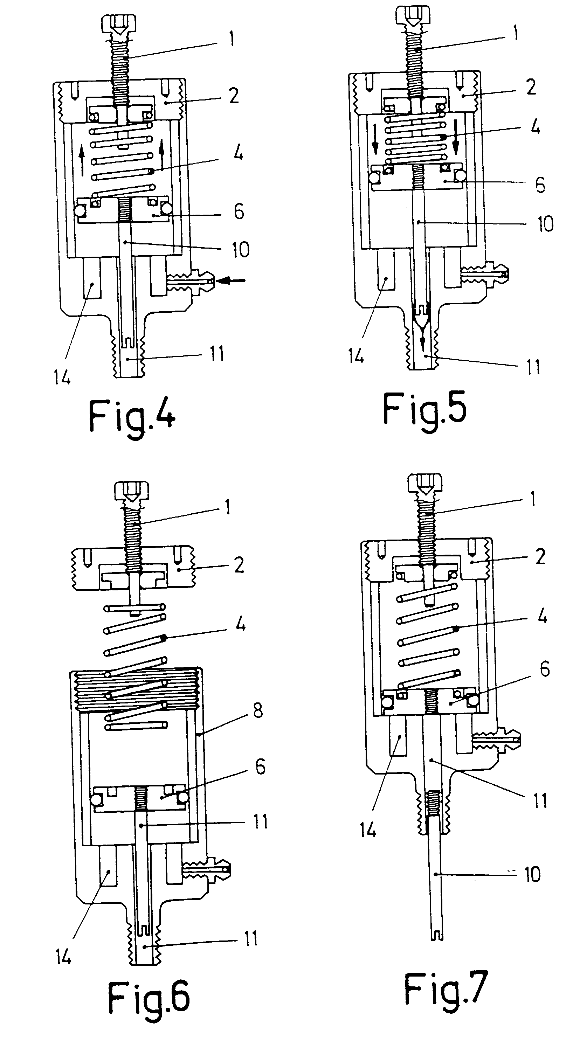

Ce système a pour effet que la pression à laquelle le lubrifiant 12 est soumis et, par conséquent, son débit de sortie, peuvent être réglés sans qu'il soit nécessaire de changer le ressort 4 ni l'aiguille doseuse 10 et, par conséquent, les variations de pression dans le lubrifiant 12, telles que celles nécessaires pour s'adapter aux variations de température, peuvent être réalisées d'une façon rapide et précise ; cependant que la disposition des différentes pièces permet de les changer, si nécessaire, d'une façon simple, rapide et sans qu'il soit nécessaire d'entrer en contact avec le lubrifiant ; de cette façon, par exemple, un changement de ressort 4 exige simplement qu'on dévisse et qu'on retire le bouchon de fermeture 2 et l'exécution du changement, comme on peut le voir sur la figure 6.

Un autre moyen pour régler le débit de sortie du lubrifiant consiste à utiliser différentes aiguilles doseuses. Pour les échanger, il suffit de vider le doseur jusqu'à ce que le piston 6 se trouve dans sa position inférieure, l'aiguille 10 émergeant alors par l'orifice 11, de sorte qu'en agissant avec un tournevis, on peut l'extraire facilement pour monter ensuite une nouvelle aiguille 10, ce qu'on effectue en l'introduisant à travers l'orifice de sortie 11 jusqu'à ce qu'elle atteigne le piston 6, pour la visser dans ce dernier, après quoi on remplit le doseur de lubrifiant 12 pour qu'il soit de nouveau prêt à l'usage.

Ainsi qu'on peut le déduire de ce qui a été décrit plus haut, le doseur objet de l'invention combine sa robustesse avec de larges possibilités de réglage de son fonctionnement et son entretien est commode et propre puisqu'il n'est nécessaire de le purger à aucun moment et que, lorsque le lubrifiant 12 s'épuise, le piston 6 est appuyé sur le fond, en laissant entre lui-même et l'entrée 13 une certaine quantité de lubrifiant 12, grâce au creux annulaire 14, ce qui empêche qu'il ne se forme des bulles d'air, cependant que, d'un autre côté, le niveau de lubrifiant 12 et le débit de sortie de ce lubrifiant peuvent être parfaitement contrôlés au moyen d'opérations extrêmement simples et rapides.

Bine entendu, d'autres modifications et variantes pourront être apportées par l'homme de l'art au dispositif qui vient d'être décrit uniquement à titre d'exemple non limitatif sans sortir du cadre de l'invention.

## Revendications

1. Doseur pour graissage continu, caractérisé en ce qu'il est constitué par un corps cylindrique creux (8) dans la partie inférieure duquel sont définis un orifice (11) de sortie et, latéralement, un orifice de remplissage (13), cependant que, dans le creux intérieur, est disposé un piston (6) de poussée du produit, lequel est soumis à l'action d'un ressort (4) qui prend appui contre une butée (3) dont le positionnement axial peut être réglé pour faire varier la pression du ressort sur le piston, tandis que le piston (6) porte une tige ou aiguille (10) qui y est incorporée et qui s'étend en laissant un certain jeu à travers l'orifice de sortie inférieur (11), ladite aiguille étant montée par vissage sur le piston (6), de sorte qu'il est possible de la remplacer par simple dévissage.

2. Doseur pour graissage continu selon la revendication 1, caractérisé en ce que la butée réglable (3) du ressort (4) servant à pousser le piston (6) est disposée en accouplement sur l'extrémité d'une vis (1) qui émerge à l'extérieur à travers un bouchon (2) de fermeture du corps cylindrique, qui est en liaison par filetage avec ladite vis, de sorte que la possibilité de faire varier la position de ladite butée (3) du ressort (4) est assurée au moyen d'une simple rotation de ladite vis (1) qui émerge à l'extérieur.

3. Doseur pour graissage continu selon les revendications 1 et 2, caractérisé en ce que le bouchon (2) de fermeture supérieure du corps cylindrique (8) est assemblé par un montage fileté par rapport audit corps (8) et qu'il peut être extrait par simple dévissage pour permettre d'exécuter sans autre disposition le démontage ou le remplacement du ressort (4) qui pousse le piston (6).

4. Doseur pour graissage continu selon la revendication 1, caractérisé en ce que le corps cylindrique (8) est muni d'ouvertures latérales (15) à la façon de fenêtres, pour permettre de vérifier la quantité contenue à l'intérieur, la fermeture desdites ouvertures (15) étant assurée par une chemise ou un indicateur de niveau (7) qui est monté pour entourer le creux intérieur cylindrique précité (8).
